# EUROPEAN PATENT APPLICATION

(11) **EP 4 799 450 A1**
(43) Date of publication of application: **02.09.2026**
(21) Application number: 26152015.9
(22) Date of filing: 15.01.2026
(51) Int. Cl.: A01B 69/00, A01B 69/04, G05D 1/00, G05D 3/00

(54) **GUIDANCE SYSTEMS FOR WORK VEHICLES**

(30) Priority: 26.02.2025 US 202519064508
(71) Applicant: Deere & Company, Moline, IL 61265 (US)
(72) Inventor: HANSEN, MATTHEW DALLAS, 68163 Mannheim (DE); OETKEN, GLEN L, 68163 Mannheim (DE)
(74) Representative: Holst, Sönke

(57) **Abstract**

Guidance systems and automation of work vehicles with complex turns are disclosed. An example work vehicle guidance system includes a visual sensor, a non-visual sensor, and a control system including a controller having a processor and a memory, wherein the control system is configured to determine a location of a work vehicle in a work area based on non-vision data from the non-visual sensor, determine an end-of-row turn path for the work vehicle from a first turn profile and a second turn profile, wherein the first turn profile and the second turn profile are multi-point turn profiles, based on the location of the work vehicle and the vision data, and output a guidance signal including the end-of-row turn path for the work vehicle to display.

## Description

### FIELD OF THE DISCLOSURE

This disclosure relates generally to work vehicle systems and, more particularly, to guidance systems for work vehicles.

### BACKGROUND

Work vehicles may semi-autonomously or fully-autonomously drive and perform operations on fields using implements for planting, spraying, harvesting, fertilizing, stripping/tilling, etc. These autonomous work vehicles include multiple sensors (e.g., Global Navigation Satellite Systems (GNSS), Global Positioning Systems (GPS), Light Detection and Ranging (LIDAR), Radio Detection and Ranging (RADAR), Sound Navigation and Ranging (SONAR), telematics sensors, Computer Vision (CV) with mono-cameras and/or stereo-cameras, etc.) to help navigate without assistance, or with limited assistance, from human users.

### BRIEF DESCRIPTION OF THE DRAWINGS

FIG. 1 is a block diagram of an example work vehicle and implement including an example work vehicle guidance system constructed in accordance with the teachings herein.
FIG. 2 is a diagram including the example work vehicle and implement of FIG. 1 operating in a work area.
FIGS. 3A-3B are diagrams of the example work vehicle and implement of FIG. 1 operating in a work area having varying elevations and having path plans including multipoint turns.
FIG. 4 is a diagram of the work vehicle and implement of FIG. 1 operating in a work area including an obstacle.
FIGS. 5A-5B are views of a user interface presented on a display of the work vehicle of FIG. 1.
FIG. 6 is a flowchart representative of example machine-readable instructions and/or example operations that may be executed, instantiated, and/or performed by example programmable circuitry to implement the work vehicle guidance system of FIG. 1.
FIG. 7 is a flowchart representative of machine-readable instructions and/or operations that may be executed, instantiated, and/or performed by example programmable circuitry to implement the work vehicle guidance system of FIG. 1, illustrating example operations included in activating obstacle detection and avoidance of FIG. 6.
FIG. 8 is a flowchart representative of machine-readable instructions and/or operations that may be executed, instantiated, and/or performed by example programmable circuitry to implement the work vehicle guidance system of FIG. 1, illustrating example operations included in activating end-of-row detection and path selection of FIG. 6.
FIG. 9 is a block diagram of an example processing platform including programmable circuitry structured to execute, instantiate, and/or perform the example machine-readable instructions and/or perform the example operations of FIGS. 6-8 to implement the work vehicle guidance system of FIG. 1.

In general, the same reference numbers will be used throughout the drawing(s) and accompanying written description to refer to the same or like parts. The figures are not necessarily to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular.

### SUMMARY

An example work vehicle guidance system includes a visual sensor, a non-visual sensor, and a control system including a controller having a processor and a memory, wherein the control system is configured to determine a location of a work vehicle in a work area based on non-vision data from the non-visual sensor, determine an end-of-row turn path for the work vehicle from a first turn profile and a second turn profile, wherein the first turn profile and the second turn profile are multi-point turn profiles, based on the location of the work vehicle and the vision data, and output a guidance signal including the end-of-row turn path for the work vehicle to display.

An example method for autonomously driving a work vehicle includes determining a location of a work vehicle to a work area based on non-vision data from a non-visual sensor, determining an end-of-row turn path for the work vehicle from a first turn profile and a second turn profile, wherein the first turn profile and the second turn profile are multipoint turn profiles, based on the location of the work vehicle to the work area and the vision data, and outputting a guidance signal including the end-of-row turn path for the work vehicle to display.

### DETAILED DESCRIPTION

An operator operating a work vehicle in a field having narrow headlands or no headlands often executes complex, multipoint turns to minimize space required by the work vehicle during a directional change (e.g., a turn). Minimizing the space required by the work vehicle to execute directional changes enables the operator to more efficiently use the field to plant crops.

Performing a complex, multipoint turn in a work vehicle requires a highly skilled operator. Lower skilled operators or operators unfamiliar with a particular work vehicle or implement may not be capable of making such turns or would have to do so at a relatively lower speed than an experienced operator. Additionally, a lower skilled operator would be unable to perform the turn as accurately and consistently as the skilled operator. If the operator is inaccurate when performing the turn, crops may be overrun and destroyed by the work vehicle, thereby harming the operator's efficiency. Further, if the operator is inaccurate when performing the turn, the work vehicle may become stuck due to obstacles such as rivers, bogs, etc.

Operators also need to account for field conditions when making turns. Field conditions may include elevation, soil moisture content, the presence of obstacles, etc. Further, operators need to account for changes in field conditions relative to prior experience or data representing the field. Changes in field conditions can occur due to a variety of factors. For example, a river may swell, or a tree may fall due to heavy rain. These conditions are different than the conditions under which a plan to operate was made. In either case, the operator needs to adjust the path of the work vehicle, accordingly, thereby deviating from the plan. In one example, a river swelling or a tree falling may reduce the amount of headland available for the work vehicle to complete a turn. In the same example, the operator may not have enough headland to complete a simple right- or left-handed turn, and may need to complete a complex, multipoint turn to avoid damaging crops. Accordingly, the operator must consider a variety of factors when choosing when a complex, multipoint turn is necessary to avoid damaging crops based on changed conditions.

A skilled/experienced operator knows, among other vehicle characteristics, how fast the vehicle can stop, accelerate, and turn. Vehicle characteristics may be affected by the field conditions. For example, if soil moisture content has increased substantially by a storm passing through, the work vehicle may not be able to stop or accelerate as it would under normal field conditions. Similarly, if there are elevation changes within the field as compared to planned field conditions, the work vehicle may veer off track depending on the severity of the elevation change, or the work vehicle may be more difficult to stop.

Implements are equipment typically used in agriculture to aid in the cultivation and harvesting of crops. Work vehicles with attached implements (e.g., plows, harrows, seeders, cultivators, etc.) require further care by the operator to avoid crop damage and to maximize field efficiency. Implements can be relatively large devices spanning multiple rows of crops and may significantly impact the work vehicle dynamics. Skilled operators are required to effectively operate work vehicles with attached large implements. Complex, multipoint turns further complicate operating a work vehicle with an implement attached. In addition to the change in vehicle dynamics, the operator must raise and lower some implements at specific points during complex, multipoint turns to avoid damaging crops in the field. If an operator forgets to raise or lower the implement, crops could be damaged, and efficiency reduced.

Operating a work vehicle in reverse when the vehicle includes an attached implement can be particularly challenging for a low skilled or inexperienced operator. An implement is usually attached to a vehicle by a hitch. The hitch creates a pivot point, such that when the work vehicle is turned in reverse, the implement will pivot in an opposite direction, which can create confusion for the operator. Different length implements may respond differently to turning movements of the work vehicle.

Existing guidance systems for work vehicles are unable to account for the many factors that a skilled operator accounts for when operating the work vehicle. Additionally, existing solutions are unable to account for changing field conditions relative to planned conditions and planned field operations and are unable to complete multipoint turns.

One known guidance system for work vehicles requires the operator to mark the boundary of a field, define a headland, and input basic characteristics of the vehicle. The known guidance system calculates a field path plan including simple right- or left-handed turns. Then, on command of user, the guidance system will drive the work vehicle along the calculated field path. If the work vehicle is commanded to perform a maneuver with which the operator disagrees, or the work vehicle cannot complete a maneuver, the operator must stop the guidance system and manually complete the maneuver before re-engaging the guidance system to continue operations in the field. If a region of the field has a headland too narrow to complete a simple right- or left-handed turn, which may be due to an actual field condition not matching a planned field condition, the operator must take control of the work vehicle, determine an appropriate multipoint turn, and complete the multipoint turn manually.

The examples described herein enable a work vehicle guidance system to determine that a field condition has changed from a planned condition, select end-of-row turn profiles, wherein the turn profiles include multipoint turn profiles, and cause a work vehicle to autonomously complete end-of-row turn profiles while accounting for field conditions, vehicle characteristics, and implement characteristics. For example, utilizing visual and non-visual sensors the described examples can determine that a field condition has changed from a planned condition due to, for example, a river that has swelled from a rainstorm and select an end-of-row turn path that conforms to the field condition. The examples described enable autonomous selection and completion of more ideal turn paths based on visual and non-visual sensor data on an active basis. Some examples described herein enable recommendations of more ideal paths to the operator, which the operator can complete manually.

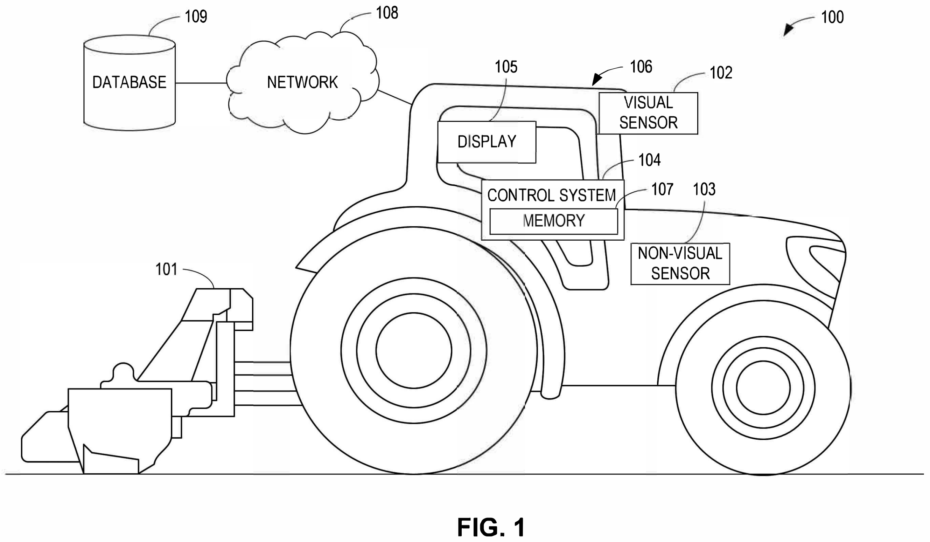

FIG. 1 is a block diagram of an example work vehicle 100 and an implement 101 equipped with a guidance system 106 constructed in accordance with the teachings herein. The guidance system 106 includes a visual sensor 102, a non-visual sensor 103, and a control system 104. The work vehicle also includes a display 105.

Visual sensors 102 typically include mono or stereo cameras. Non-visual sensors 103 can include inertial measurement units (IMU), global positioning systems (GPS), wheel speed sensors, steering angle sensors, light detecting and ranging (LiDAR) sensors, radio detection and ranging (radar), ultrasonic sensors, etc. The illustrated example includes one visual sensor 102 and one non-visual sensor 103. However, some examples may include a plurality of visual sensors 102 and non-visual sensors 103 placed throughout the work vehicle 100 or implement 101. Including more than one visual and non-visual sensor can allow for increased performance and reliability of the guidance system 106. For example, including more than one visual sensor enables the guidance system 106 to have multiple views of a work area.

The display 105 may be utilized to convey information to the operator corresponding to the position of the work vehicle 100 relative to the field. Further, the display 105 may be utilized to show planned end-of-row turn paths, obstacles in the work area, vehicle characteristics, etc. In some examples, the display 105 may be a touch display that enables the operator to select between different views of information or provide input to the guidance system 106. For example, when the guidance system 106 is configured to have a first visual sensor 102 and a second visual sensor 102, the operator may select via the display 105 to view a stream of vision data from the first visual sensor 102.

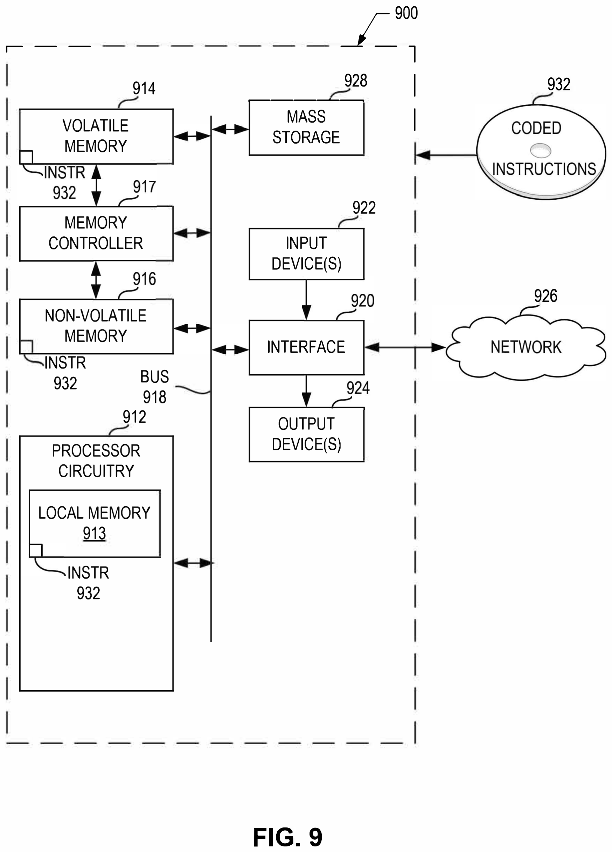

As explained in conjunction with FIG. 9, the control system 104 includes a controller having a processor and a memory 107. The memory 107 includes a pre-determined field path including expected field conditions. The control system 104 may update the memory 107 through a network 108 attached to a database 109. The database 109 may include satellite imagery of the work area, weather data, geographical data, etc.

In operation, the control system 104 is configured to determine a location of the work vehicle 100 in a work area based on non-vision data from the non-visual sensor 103 and determine an end-of-row turn path for the work vehicle 100 from a first turn profile and a second turn profile. For example, the control system 104 may determine an actual field condition based on vision data from the visual sensor 102 and compare the actual field condition to the expected field condition in memory 107. In response to a determined difference between the actual field condition and the expected field condition the control system 104 then determines a suitable end-of-row turn path from the first turn profile and the second turn profile which include complex, multipoint turns. In some examples, the control system 104 is configured to select the end-of-row turn path from the first turn profile and the second turn profile that takes the least amount of time and can be completed within a headland of the work area. In other examples, the control system 104 may be configured to select the turn path from the first turn profile and the second profile based on a user preference (e.g., comfortability of the operator, speed of the turn, etc.).

Further, the control system 104 is configured to output a guidance signal including the end-of-row turn path for the work vehicle 100 to the display 105. In some examples, the control system 104 may output a plurality of end-of-row turn paths to the display 105 and accept input from the operator to select a preferred end-of-row turn path. Further, the control system 104 may be configured to output other information to the display 105 including weather data, vehicle characteristics, field conditions, etc.

In the illustrated example, the control system 104 can determine a three-dimensional (3D) representation of the work vehicle 100 and the implement 101 using vision data and non-vision data. For example, the control system 104 may determine the 3D representation of the work vehicle 100 based on vehicle characteristics, implement characteristics, etc. In one example the control system 104 determines the location of a known reference point of the work vehicle 100 and uses the known reference point to increase accuracy of the 3D representation of the work vehicle 100. In some examples, the control system 104 may output the 3D representation of the work vehicle 100 and the implement 101 to the display 105.

Further, the control system 104 may be configured to determine the end-of-row turn path based on the location of the work vehicle 100, the vision data, and the 3D representation of the work vehicle 100 and the implement 101. Considering the 3D representation of the work vehicle 100 and the implement 101 when selecting the end-of-row turn path can enable increased accuracy of the control system 104 when performing end-of-row turn paths. In some examples, the 3D representation of the work vehicle 100 and the implement 101 may be reconstructed on startup of the control system 104, or if the control system 104 detects that the implement 101 has been changed.

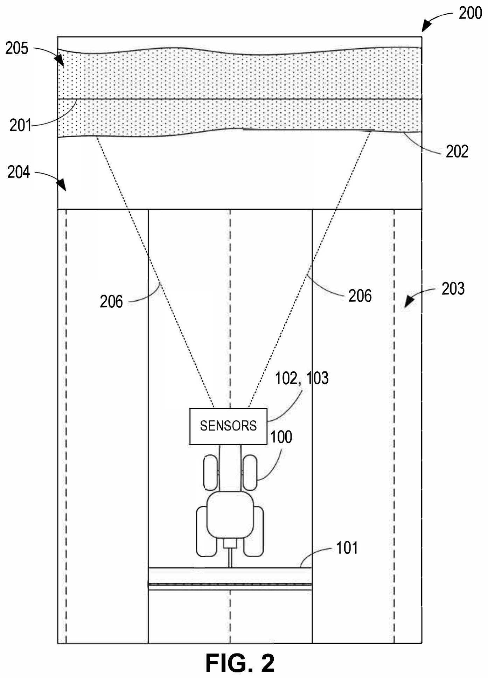

FIG. 2 is a diagram including the work vehicle 100 and implement 101 of FIG. 1 operating in a work area 200. The work area 200 includes a field 203, a headland 204, an expected field condition 201 and an actual field condition 202. An expected field condition 201 is a pre-determined boundary of the work area 200 where the work vehicle 100 and implement 101 cannot operate. The expected field condition 201 is set by the operator prior to operating the work vehicle 100.

In the illustrated example, the expected field condition 201 is defined by a river 205. As shown in FIG. 2, the river 205 has swollen so that an edge of the river 205 has moved closer to the field 203 decreasing an area of the headland 204. In other examples, the difference between the expected field condition 201 and the actual field condition 202 can occur due to unexpected obstacles (fallen trees, large rocks, debris), terrain erosion, animal intrusion, etc. As the work vehicle 100 and implement 101 approach the expected field condition 201 the control system 104 determines a difference between the expected field condition 201 and the actual field condition 202 based on vision data from the visual sensor 102. In the illustrated example, the sensors 102, 103 include a field of view 206. In other examples, the field of view 206 may be narrower or wider than the illustrated example. In still other examples, a plurality of sensors 102, 103 may include a plurality of field of views 206.

In some examples, when the control system 104 determines a difference between the expected field condition 201 and the actual field condition 202 the control system 104 automatically determines an end-of-row turn path for the work vehicle 100 from a first turn profile and a second turn profile, wherein the first turn profile and the second turn profile are multi-point turn profiles, based on the location of the work vehicle 100, the vision data, and the actual field condition 202.

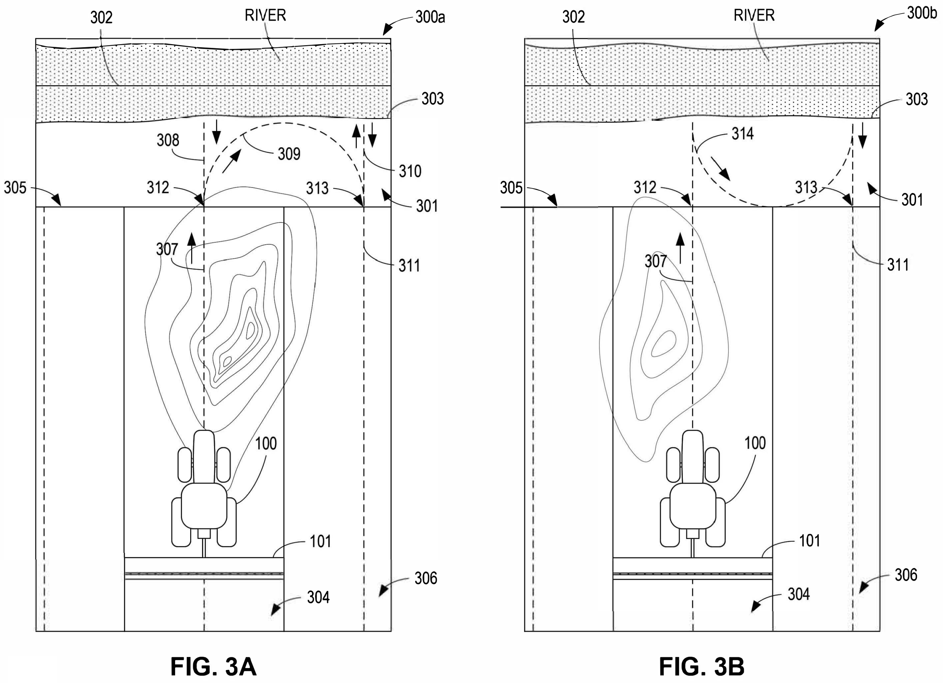

FIGS. 3A-3B are diagrams of the work vehicle 100 and implement 101 of FIG. 1 operating in work areas 300a-300b having varying elevations and completing a series of multipoint turns. The work areas 300a-300b of FIGS. 3A-3B include uneven terrain, a plurality of rows, a headland 301, an expected field condition 302, and an actual field condition 303. In the illustrated examples, the control system 104 is configured to autonomously execute determined complex, multipoint end-of-row turn paths. In some examples, the control system 104 may recommend ideal end-of-row turn paths to the operator, which the operator can complete manually.

The control system 104 is configured to determine a difference between an expected field condition 302 and an actual field condition 303. For example, the control system 104 may determine the actual field condition 303 based on vision data from the visual sensor 102. Then the control system 104 may compare the actual field condition to the expected field condition 302 in memory 107. When the control system 104 determines a difference between an expected field condition 302 and an actual field condition 303, the control system is further configured to determine whether a simple right- or left-handed turn is possible in the newly defined headland 301. If a simple right- or left-handed turn is not possible, the control system 104 is configured to determine a multipoint turn profile.

The illustrated example of FIG. 3A includes a condensed U-turn. The condensed U-turn is performed by the work vehicle 100 and implement 101 when the work vehicle 100 and implement 101 drive along path 307 to an end of a first row 304 and stop so that a front of the work vehicle 100 is at or near the actual field condition 303. Then the work vehicle 100 and implement 101 reverse along path 308 until a rear of the work vehicle 100 is at or near a boundary 305 of the headland 301. Then the work vehicle 100 and implement 101 turn along a path 309 to face a beginning of an adjacent second row 306 and drive until a rear of the implement 101 is at or near the boundary 305 of the headland 301. Then the work vehicle 100 and implement 101 reverses along a path 310 until the rear of the implement 101 is at or near the actual field condition 303. Finally, the work vehicle 100 and implement 101 drive along path 311.

The illustrated example of FIG. 3B includes a reverse U-turn. The reverse U-turn is performed when the work vehicle 100 and implement 101 drive along a path 307 to an end of a first row 304 and stops so that the front of the work vehicle 100 is at or near the actual field condition 303. Then the work vehicle 100 and implement 101 turns along path 314 while reversing to face a beginning of an adjacent second row 306. Finally, the work vehicle 100 and implement 101 drive along path 311.

In some examples, the control system 104 may be configured to raise and lower the implement 101 during the condensed U-turn or the reverse U-turn. For example, the control system 104 may raise implement 101 at point 312 when the work vehicle 100 and implement 101 are traveling along path 307. Further, the control system 104 may lower implement 101 at point 313 when the vehicle and implement 101 are traveling along path 311.

In some examples, the control system 104 may modulate the pattern of a turn, or a speed of the work vehicle 100 based on elevation data. For example, when the work vehicle 100 and implement 101 operate in a work area with a steep elevation, it may take longer for the work vehicle 100 to stop, or the turning of the work vehicle 100 may be affected. The control system 104, may modulate the pattern of a turn based on elevation data. In other examples, the control system 104 may modulate the pattern of a turn based on vision data, non-vision data, or a user preference. For example, a user could prefer speed, accuracy, comfort, etc. of the turn.

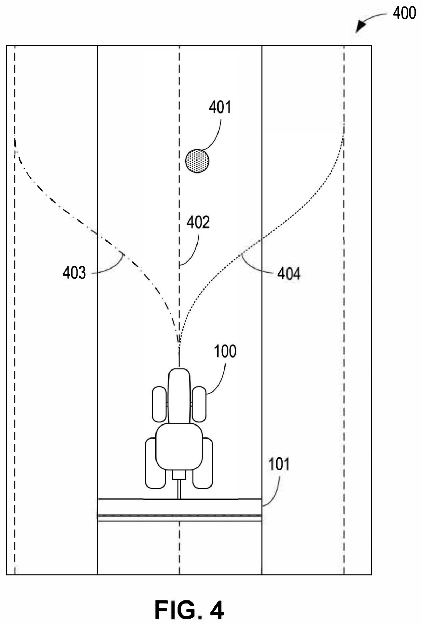

FIG. 4 is a diagram of the work vehicle 100 and the implement 101 of FIG. 1 operating in a work area 400 including an obstacle 401. The obstacle 401 was not used in determining the original field path 402 (e.g., not in memory 107). In the illustrated example, the control system 104 is configured to identify the obstacle 401 based on vision data. Further, the control system 104 is configured to determine an obstacle avoidance path from the first turn profile and the second turn profile based on the obstacle 401, the location, and the vision data to avoid the obstacle 401 and output the obstacle avoidance path to the display 105. In some examples, the control system 104 may determine the obstacle avoidance path based on a plurality of turn profiles, including complex, multipoint turns 403, 404 and single point turns. In some examples, when the control system 104 identifies the obstacle 401 based on vision data, the control system 104 will indicate to the user the presence of the obstacle 401. In turn, the control system 104 may output more than one obstacle avoidance path to the display 105 and accept input from an operator.

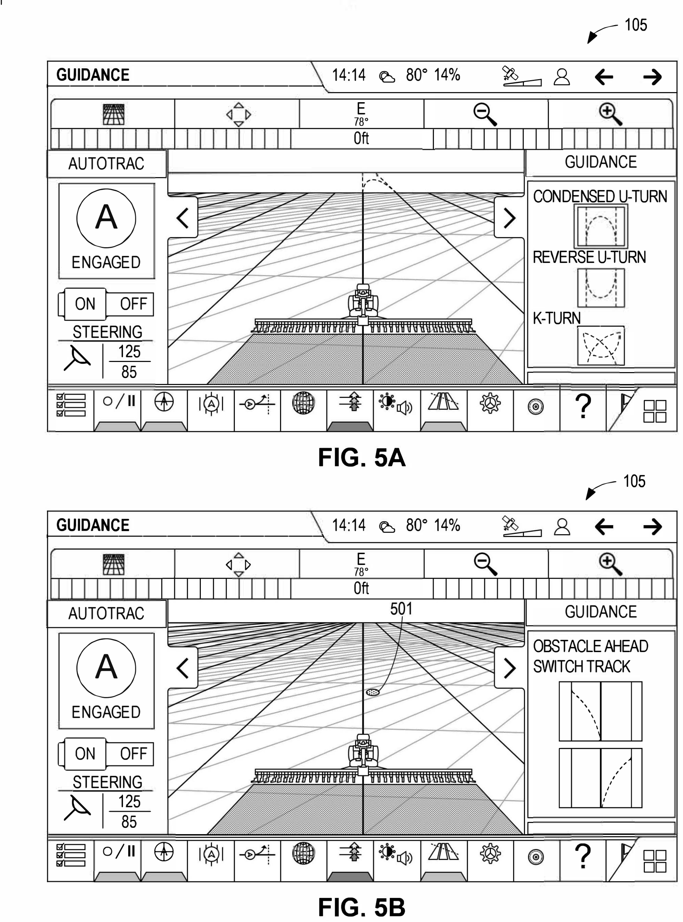

FIGS. 5A-5B are views of the display 105 of the work vehicle 100 of FIG. 1. The illustrated example includes 3D representations of both the work vehicle 100 and the implement 101. In some examples, the display 105 provides a 3D representation of an identified obstacle 501. Further, in some examples, the display 105 is a touch display that can accept user input.

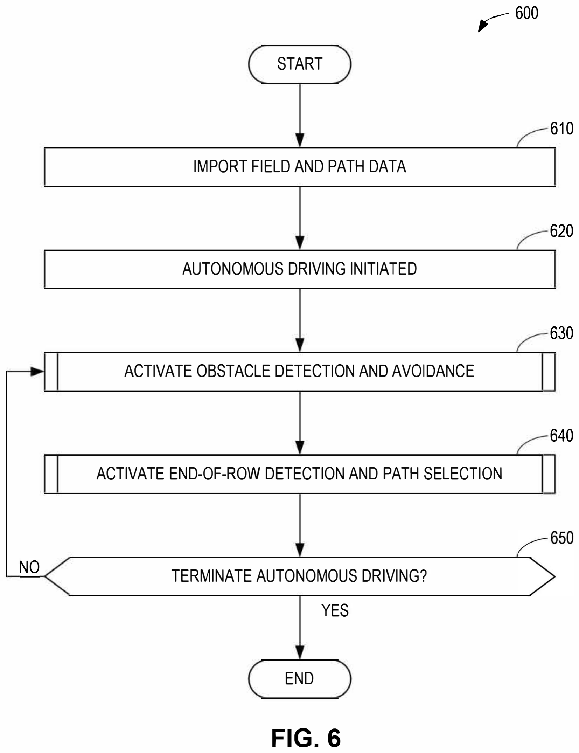

FIG. 6 is a flowchart of example machine-readable instructions and/or example operations 600 that may be executed, instantiated, and/or performed by programmable circuitry to enable the vehicle guidance system of FIG. 1. The example machine-readable instructions and/or the example operations 600 of FIG. 6 begin at block 610, at which the control system 104 initiates autonomous driving. In some examples, the control system 104 may initiate autonomous driving in response to a user input such as a button press, or input to the display 105.

At block 620, the control system 104 imports field and path data. In some examples, the field and path data may originate from previous field and path data of the work area, GPS data, user designated boundaries, etc.

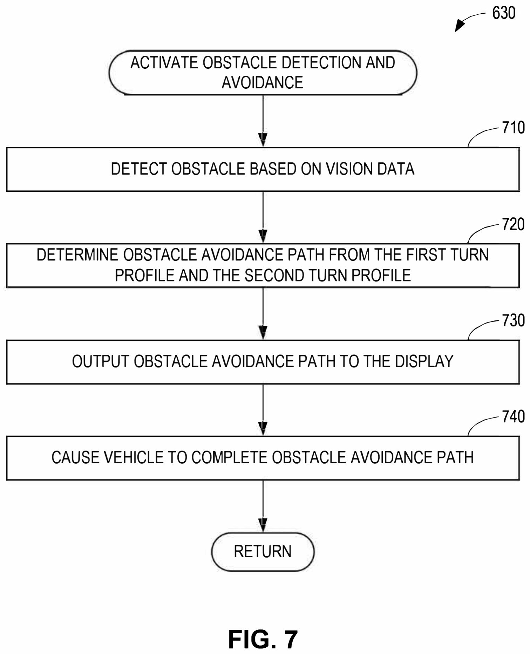

FIG. 7 is a flowchart of the machine-readable instructions and/or operations of FIG. 6 that may be executed, instantiated, and/or performed by programmable circuitry to enable the vehicle guidance system of FIG. 1, illustrating the steps included in activating obstacle detection and avoidance within block 630. Block 630 of the example machine-readable instructions and/or the examples operations 600 of FIG. 6 is illustrated in detail beginning at block 710, at which the control system 104 detects an obstacle based on vision data from the visual sensor 102. In some examples, detecting an obstacle based on vision data may further include non-vision data from the non-visual sensor 103. Including non-vision data when detecting obstacles in a work area enables increased accuracy in the position of the obstacle relative to the work vehicle 100 and implement 101.

At block 720, the control system 104 determines an obstacle avoidance path from a first turn profile and a second turn profile. In some examples, the first and second turn profiles may further include a plurality of turn profiles including condensed U-turns, reverse U-turns, K-turns, etc. In some examples, the control system 104 may select a primary and a secondary obstacle avoidance path.

At block 730, the control system 104 outputs the obstacle avoidance path to the display 105. In some examples, the control system may output a primary and secondary obstacle avoidance path to the display 105. Further, the control system 104 may accept a user input to select between the primary and secondary obstacle avoidance path.

At block 740, the control system 104 causes the work vehicle 100 and implement 101 to complete the obstacle avoidance path. In some examples, the control system 104 controls steering, acceleration, and braking of the work vehicle 100. Further, the control system 104 may control the position of the implement 101.

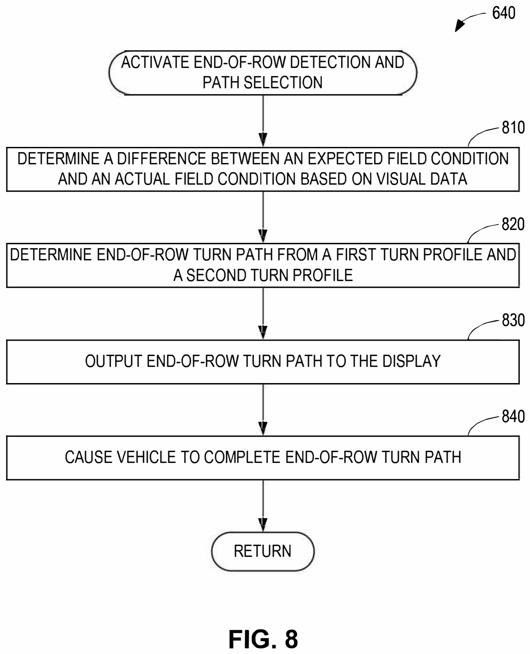

FIG. 8 is a flowchart of the machine-readable instructions and/or operations of FIG. 6 that may be executed, instantiated, and/or performed by programmable circuitry to enable the vehicle guidance system of FIG. 1, illustrating the steps included in activating end-of-row detection and path selection within block 640. Block 640 of the example machine-readable instructions and/or the examples operations 600 of FIG. 6 is illustrated in detail beginning at block 810, at which the control system 104 determines a difference between an expected field condition and an actual field condition based on vision data from the visual sensor 102. In some examples, determining a difference between an expected field condition and an actual field condition based on vision data may further include non-vision data from the non-visual sensor 103. Including non-vision data determining a difference between an expected field condition and an actual field condition enables increased accuracy in the position of the actual field condition relative to the work vehicle 100 and implement 101.

At block 820, the control system 104 determines an end-of-row turn path from a first turn profile and a second turn profile. In some examples, the first and second turn profiles may further include a plurality of turn profiles including condensed U-turns, reverse U-turns, K-turns, etc. In some examples, the control system 104 may select a primary and a secondary end-of-row turn path.

At block 830, the control system 104 outputs the end-of-row turn path to the display 105. In some examples, the control system may output a primary and secondary end-of-row turn path to the display 105. Further, the control system 104 may accept a user input to select between the primary and secondary end-of-row turn path.

At block 840, the control system 104 causes the work vehicle 100 and implement 101 to complete the end-of-row turn path. In some examples, the control system 104 controls steering, acceleration, and braking of the work vehicle 100. Further, the control system 104 may control the position of the implement 101.

Continuing with block 650 of FIG. 6, the control system 104 determines whether autonomous driving has been terminated. In some examples, autonomous driving may be terminated by a user input such as a button, or input to the display 105. In other examples, the control system 104 may terminate autonomous driving upon a determination of a fault of the control system, or a field condition that creates a safety concern for a user.

FIG. 9 is a block diagram of an example programmable circuitry platform 900 structured to execute and/or instantiate the example machine-readable instructions and/or the example operations of FIGS. 6-8 to implement the vehicle guidance system of FIG. 1. The programmable circuitry platform 900 can be, for example, a server, a personal computer, a workstation, a self-learning machine (e.g., a neural network), a mobile device (e.g., a cell phone, a smart phone, a tablet such as an iPad^{™}), or any other type of computing and/or electronic device.

The programmable circuitry platform 900 of the illustrated example includes programmable circuitry 912. The programmable circuitry 912 of the illustrated example is hardware. For example, the programmable circuitry 912 can be implemented by one or more integrated circuits, logic circuits, FPGAs, microprocessors, CPUs, GPUs, DSPs, and/or microcontrollers from any desired family or manufacturer. The programmable circuitry 912 may be implemented by one or more semiconductor based (e.g., silicon based) devices. In this example, the programmable circuitry 912 implements the control system 104.

The programmable circuitry 912 of the illustrated example includes a local memory 913 (e.g., a cache, registers, etc.). The programmable circuitry 912 of the illustrated example is in communication with main memory 914, 916, which includes a volatile memory 914 and a non-volatile memory 916, by a bus 918. The volatile memory 914 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 916 may be implemented by flash memory and/or any other desired type of memory device. Access to the main memory 914, 916 of the illustrated example is controlled by a memory controller 917. In some examples, the memory controller 917 may be implemented by one or more integrated circuits, logic circuits, microcontrollers from any desired family or manufacturer, or any other type of circuitry to manage the flow of data going to and from the main memory 914, 916.

The programmable circuitry platform 900 of the illustrated example also includes interface circuitry 920. The interface circuitry 920 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 922 are connected to the interface circuitry 920. The input device(s) 922 permit(s) a user (e.g., a human user, a machine user, etc.) to enter data and/or commands into the programmable circuitry 912. The input device(s) 922 can be implemented by, for example, an audio sensor, a microphone, a camera (still or video), a keyboard, a button, a mouse, a touchscreen, a trackpad, a trackball, an isopoint device, and/or a voice recognition system.

One or more output devices 924 are also connected to the interface circuitry 920 of the illustrated example. The output device(s) 924 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), and/or speaker. The interface circuitry 920 of the illustrated example, thus, typically includes a graphics driver card, a graphics driver chip, and/or graphics processor circuitry such as a GPU.

The interface circuitry 920 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 926. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 900 of the illustrated example also includes one or more mass storage discs or devices 928 to store firmware, software, and/or data. Examples of such mass storage discs or devices 928 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine-readable instructions 932, which may be implemented by the machine-readable instructions of FIGS. 6-8, may be stored in the mass storage device 928, in the volatile memory 914, in the non-volatile memory 916, and/or on at least one non-transitory computer readable storage medium such as a CD or DVD which may be removable.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a," "an," "first," "second," etc.) do not exclude a plurality. The term "a" or "an" object, as used herein, refers to one or more of that object. The terms "a" (or "an"), "one or more," and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

From the foregoing, it will be appreciated that example systems, apparatus, articles of manufacture, and methods have been disclosed that enable guidance systems and automations of work vehicles.

## Claims

1. A work vehicle guidance system (106), comprising:
a visual sensor (102);
a non-visual sensor (103); and
a control system (104) including a controller having a processor and a memory (107), wherein the control system (104) is configured to:
determine a location of a work vehicle (100) in a work area based on non-vision data from the non-visual sensor (103);
determine an end-of-row turn path for the work vehicle (100) from a first turn profile and a second turn profile, wherein the first turn profile and the second turn profile are multi-point turn profiles, based on the location of the work vehicle (100) and vision data from the visual sensor (102); and
output a guidance signal including the end-of-row turn path for the work vehicle (100) to a display (105).

2. The work vehicle guidance system (106) of claim 1, wherein the control system (104) determines a difference between an expected field condition (201) and an actual field condition based (202) on the vision data.

3. The work vehicle guidance system (106) of claim 1, wherein the control system (104) is further configured to execute the end-of-row turn path autonomously.

4. The work vehicle guidance system (106) of claim 1, wherein determining the end-of-row turn path for the work vehicle (100) is further based on elevation data, and wherein a speed of the work vehicle (100) is adjusted based on elevation data.

5. The work vehicle guidance system (106) of claim 1, wherein the control system (104) is further configured to identify an obstacle (401) based on the vision data.

6. The work vehicle guidance system (106) of claim 5, wherein the control system (104) is further configured to determine an obstacle avoidance path from the first turn profile and the second turn profile based on the obstacle (401), the location, and the vision data to avoid the obstacle (401) and output the obstacle avoidance path to the display (105).

7. The work vehicle guidance system (106) of claim 1, wherein the control system (104) outputs a second guidance signal to the display (105) and accepts a user input to select a preferred end-of-row turn path.

8. The work vehicle guidance system (106) of claim 1, wherein the control system (104) determines a turn area from the work area and modulates the end-of-row turn path based on a user preference, the vision data, and non-vision data.

9. The work vehicle guidance system (106) of claim 1, wherein the control system (104) is further configured to automatically raise and lower an implement (101) of the work vehicle (100) based on the end-of-row turn path.

10. The work vehicle guidance system (106) of claim 1, wherein the first turn profile and the second turn profile include a reverse U-turn.

11. The work vehicle guidance (106) system of claim 1, wherein the first turn profile and the second turn profile include a condensed U-turn.

12. A method (600) for guiding a work vehicle (100) comprising:
determining a location of the work vehicle (100) to a work area based on non-vision data from a non-visual sensor (103);
determining an end-of-row turn path for the work vehicle (100) from a first turn profile and a second turn profile, wherein the first turn profile and the second turn profile are multi-point turn profiles, based on the location of the work vehicle (100) to the work area and vision data from a visual sensor (102); and
outputting a guidance signal including the end-of-row turn path for the work vehicle (100) to a display (105).

13. The method (600) of claim 12, further including executing the end-of-row turn path autonomously.

14. The method (600) of claim 12, wherein the first turn profile and the second turn profile include a reverse U-turn.

15. The method (600) of claim 12, wherein the first turn profile and the second turn profile include a condensed U-turn.

## Amended claims

### Amended claims in accordance with Rule 137(2) EPC.

1. A work vehicle (100) with an implement (101) and a guidance system (106), comprising:
a visual sensor (102);
a non-visual sensor (103); and
a control system (104) including a controller having a processor and a memory (107), wherein the control system (104) is configured to:
store, in the memory (107) a pre-determined field path including an expected field condition (201) regarding a pre-determined boundary of a work area (200) where the work vehicle (100) and implement (101) cannot operate,
determine a location of a work vehicle (100) in the work area (200) based on non-vision data from the non-visual sensor (103);
determine a difference between the expected field condition (201) and an actual field condition based (202) on the vision data from the visual sensor (102);
determine an end-of-row turn path for the work vehicle (100) from a first turn profile and a second turn profile, wherein the first turn profile and the second turn profile are multipoint turn profiles, based on the determined location of the work vehicle (100) and the determined difference between the actual field condition (202) and the expected field condition (201); and
output a guidance signal including the end-of-row turn path for the work vehicle (100) to a display (105),

2. The work vehicle guidance system (106) of claim 1, wherein the control system (104) is further configured to execute the end-of-row turn path autonomously.

3. The work vehicle guidance system (106) of claim 1, wherein determining the end-of-row turn path for the work vehicle (100) is further based on elevation data, and wherein a speed of the work vehicle (100) is adjusted based on elevation data.

4. The work vehicle guidance system (106) of claim 1, wherein the control system (104) is further configured to identify an obstacle (401) based on the vision data.

5. The work vehicle guidance system (106) of claim 4, wherein the control system (104) is further configured to determine an obstacle avoidance path from the first turn profile and the second turn profile based on the obstacle (401), the location, and the vision data to avoid the obstacle (401) and output the obstacle avoidance path to the display (105).

6. The work vehicle guidance system (106) of claim 1, wherein the control system (104) is configured to output a second guidance signal to the display (105) and to accept a user input to select a preferred end-of-row turn path.

7. The work vehicle guidance system (106) of claim 1, wherein the control system (104) is configured to determine a turn area from the work area and modulates the end-of-row turn path based on a user preference, the vision data, and non-vision data.

8. The work vehicle guidance system (106) of claim 1, wherein the control system (104) is further configured to automatically raise and lower an implement (101) of the work vehicle (100) based on the end-of-row turn path.

9. The work vehicle guidance system (106) of claim 1, wherein the first turn profile and the second turn profile include a reverse U-turn.

10. The work vehicle guidance (106) system of claim 1, wherein the first turn profile and the second turn profile include a condensed U-turn.
